# EUROPEAN PATENT SPECIFICATION

(11) **EP 4 410 425 B1**
(45) Date of publication and mention of the grant of the patent: **04.11.2026**
(21) Application number: 22874972.7
(22) Date of filing: 28.09.2022
(51) Int. Cl.: C10G 11/04, B01J 21/04, B01J 23/34, B01J 35/30, B01J 35/32, B01J 35/40, B01J 35/51

(54) **METAL POLLUTION-RESISTANT CATALYST AND PREPARATION METHOD THEREFOR**
METALLVERUNREINIGUNGSBESTÄNDIGER KATALYSATOR UND HERSTELLUNGSVERFAHREN DAFÜR
CATALYSEUR RÉSISTANT À LA POLLUTION PAR LES MÉTAUX ET PROCÉDÉ DE PRÉPARATION ASSOCIÉ

(30) Priority: 30.09.2021 CN 202111158872
(43) Date of publication of application: 07.08.2024
(73) Proprietor: China Petroleum & Chemical Corporation, Beijing 100728 (CN); Sinopec Research Institute of Petroleum Processing Co., Ltd., Beijing 100083 (CN)
(72) Inventor: SONG, Haitao, Beijing 100083 (CN); CHEN, Yan, Beijing 100083 (CN); XU, Mingde, Beijing 100083 (CN); LIU, Qianqian, Beijing 100083 (CN); FENG, Menglong, Beijing 100083 (CN); LIU, Yuqing, Beijing 100083 (CN)
(74) Representative: Hoffmann Eitle
(86) International application number: PCT/CN2022/122054
(87) International publication number: WO 2023/051588

(56) References cited:
- CN-A- 101 332 433
- CN-A- 103 623 858
- CN-A- 105 688 977
- CN-A- 105 728 029
- CN-A- 105 728 030
- CN-A- 105 728 031
- CN-A- 105 728 031
- CN-A- 105 772 074
- CN-A- 108 786 901
- CN-B- 104 014 361
- JP-A- 2003 190 817
- JP-A- 2003 190 817
- JP-A- H03 293 037
- JP-A- H09 164 338
- JP-A- H09 173 854
- JP-A- H1 133 406
- RU-C1- 2 285 562

## Description

### Technical Field

The present invention belongs to the technical field of catalytic cracking, and relates to a catalyst increasing the nickel tolerance of catalytic cracking of a heavy oil, its preparation and application.

### Background Technology

Fluid catalytic cracking (FCC) technology has become an important means of secondary processing of heavy oil in the world today due to its characteristics of the low investment, the strong adaptability of raw materials and the simple operation. Therein catalytic cracking catalysts play a crucial role. With the increasing depletion of high-quality light crude oil resources worldwide and the improvement of the delayed coking capacity, refineries mix a large proportion of the inferior crude oil such as the residual oil, the coking wax oil and the deasphalted oil, in catalytic cracking devices in order to increase efficiency. This has seriously affected the stable operation of catalytic cracking devices and the distribution of cracking products, and thus puts forward higher requirements for the performance of catalytic cracking catalysts.

Since a residual oil feed usually contains the pollutant metals Ni and V, during the use of catalytic cracking catalysts, heavy metals such as nickel and vanadium in the feedstock oil will continuously deposit on the surface of the catalysts, causing certain toxic effects on the catalysts. With the increased Ni content in catalysts in the catalytic cracking devices, the catalysts exhibit a strong catalytic dehydrogenation effect. The ratio of hydrogen to methane increases, and the yields of hydrogen and coke increase. High value products such as gasoline and LPG are affected. In addition, a high hydrogen yield will also cause the gas compressor to bear a greater pressure. During the use of catalysts, new nickel will deposit continuously, so there is always a portion of nickel that can be completely or partially reduced as "active nickel". Each refinery suppresses the dehydrogenation toxicity of this portion of "active nickel" by adding an additional passive Ni agent during the reaction process. The passive Ni agent are often injected into cracking reactors in an oil-soluble or water-soluble liquid state. During the reaction process, its effective component comes into contact with the catalyst surface and interacts with the "active nickel" on the catalyst surface to deprive the toxicity. Since antimony has the best effect of passivating the toxicity of nickel, currently commonly used metal passivators include the antimony type metal passivator. Research suggests that antimony forms stable nickel antimonite NiSbₓO_{y} with the reduced-state nickel, thereby changing the electronic properties of nickel and passivating the dehydrogenation activity of Ni.

However, when an antimony type nickel passivator is added to a catalytic cracking device, the leaching toxicity of antimony metal of the catalytic cracking waste catalyst exceeds the Class III standard limit of the Surface Water Quality Standard (GB/T14848-2017): *100 antimony 0.5 mg/L, resulting in a certain environmental risk from the catalytic cracking waste catalyst. In addition, adding the agent passivating nickel by antimony to the device will easily cause Sb to condense at the valve, which has some impacts on the control of the device. Therefore, in the face of increasingly strict environmental and safety requirements, being also able to passivate the active nickel on the catalyst surface without the use of the additional antimony Sb and using a catalyst with a high nickel tolerance are an important means to reduce hazardous wastes from the source.

US 14/134614 relates to a B-containing anti-nickel catalyst technology reported by Basf. Although the boron component has an excellent effect on passivating nickel, boric acid has a particularly big destructive effect on the molecular sieve and the catalyst activity, and is introduced in a particularly low amount with the precondition of not damaging the catalyst activity, thus having a limited effect on reducing the dehydrogenation activity of nickel.

US4919787A introduces a catalytic cracking catalyst containing a metal passivating **material** which includes a precipitated porous rare earth oxide, alumina and aluminum phosphate precipitate. The passivating materials can be applied on the cracking catalyst, and can be a part of the substrate of the cracking catalyst or can be added as discrete particles in the cracking operations. According to the introduction, this material is beneficial for stabilizing the catalytic activity, but its effect on reducing the ratio of hydrogen to methane is limited.

CN102019198A introduces a solid co-catalyst which is prepared from 10 to 50% by weight of highly active lanthanum oxide, 0.1 to 20% by weight of fine-particle antimony oxide, 1 to 30% by weight of highly active Y molecular sieve modified on the outer surface by rare earth, and the balance of alumina-based binder consisting of acidified pseudo-boehmite and/or aluminum sol. The co-agent further contains some Sb, and has a certain effect on resisting the dehydrogenation activity of nickel.

CN103785346B provides a metal collector and its preparation method and application. The metal collector contains magnesium oxide, alumina with a gradient pore distribution, a lanthanide rare earth metal oxide and/or a transition metal oxide, and at least a part of the magnesium oxide forms a magnesium aluminum spinel structure. The use of this metal collector can slow down the damage of vanadium to the catalytic cracking catalyst, improve the selectivity of coke and dry gas, and increase the total liquid product yield.

CN10572803 1A discloses a catalytic cracking catalyst and a production method thereof. The catalytic cracking catalyst comprises, according to the dry basis, 0.5 to 15% by weight of a large grain alumina material; 5 to 70% by weight of an inorganic oxide binder; 15 to 60% by weight of molecular sieve; 5 to 50% by weight of clay, and 0 to 5% by weight of phosphorus; wherein the large-grained alumina material has pseudo-boehmite structure , gibbsite structure or gibbsite structure, sodium oxide content ≤ 0.2% by weight, silica content ≤ 0.3% by weight, grain size of 100 ~ 1160nm; the inorganic oxide binder is aluminum sol and a mixture of pseudoboehmite, wherein alumina derived from pseudoboehmite accounts for 3-40% by weight of the catalyst, and alumina derived from aluminum sol accounts for 4-30% by weight of the catalyst; the molecular sieve is used for catalytic cracking a mixture of one or more of a catalyst active component of zeolite and a non-zeolitic molecular sieve; the clay is selected from the group consisting of kaolin, halloysite, montmorillonite, diatomaceous earth, halloysite, hydrotalcite, attapulgite, a mixture of one or more of bentonite or sepiolite.

CN104014361B discloses a catalytic cracking catalyst and a production method thereof. The catalytic cracking catalyst comprises 1 to 60% by weight of modified bimodal distribution alumina, 10 to 70% by weight of molecular sieves, 1 to 60% by weight of binder and 5 to 70% by weight of clay; said molecular sieve is The FAU structural zeolite is based on the weight of the modified two-pore distributed alumina, and the modified two-pore distributed alumina contains 0.05 to 1% by weight of rare earth based on RE2O3 and 0.5 to 10% by weight of SiO2. Silicon; The modified two-pore distribution alumina has a crystalline phase structure of γ-alumina, the pore diameter of the pores with smaller pore diameters is 4-9.5 nm, and the pore size of pores with larger pore diameters is 12-25 nm. Its specific surface area is 250-500m2/g, pore volume is 0.6-1.8cm3/g.

JP2003190817A discloses a method for producing a catalyst composition for catalytic cracking of hydrocarbon oil, characterized by spray-drying a mixture comprising a crystalline aluminosilicate zeolite, a pseudo-boehmite type alumina hydrate having an aluminium-acid dissolution index of the alumina hydrate slurry in the range of 5 to 30, and an inorganic oxide matrix precursor.

### Summary of the Invention

The inventors have found by research that the nickel pollution in the catalytic cracking catalyst is mainly deposited on the outer surface of the catalyst. When it has not yet been well combined and stabilized with a substrate of the catalyst, it has a certain degree of surface migration property and contact transfer property. Therefore, introducing a nickel-tolerant microsphere with a better nickel-tolerant surface into the catalyst can increase the nickel stability of the entire catalyst, thereby significantly reducing the performance of the ratio of hydrogen to methane under condition of a considerable nickel pollution.

It is found by research that alumina with a surface rich in hydroxyl itself has a certain nickel-tolerant property. The inventors have found through a further research that adding a certain amount and preferably a certain particle size of a non-acid-soluble second alumina material to an acid-soluble alumina can stabilize the surface of alumina and stabilize the nickel-tolerant capacity through a specific coordination between the two.

Furthermore, it is found by research that adding a certain amount of manganese to the continuous phase alumina material in the metal-resistant catalyst can further improve the performance of the metal-resistant catalyst in terms of reducing the ratio of hydrogen to methane under a nickel pollution. Particularly, without being limited by any known theory, the introduction of manganese sources by means of the combination of manganese ore (mainly MnO) and manganese salts can achieve an excellent equilibrium technical effect, for example in terms of the aspects of reducing the ratio of hydrogen to methane and affecting the catalyst activity.

The technical problem to be solved by the present invention is to provide a catalytic cracking metal pollution-resistant catalyst, which has a lower ratio of hydrogen to methane when a catalytic cracking is performed in the presence of nickel pollution.

Another technical problem to be solved by the present invention is to provide a method for preparing the metal pollution-resistant catalyst.

Another technical problem to be solved by the present invention is to provide a catalytic cracking catalyst containing the above metal pollution-resistant catalyst, which has a lower ratio of hydrogen to methane, and has lower yields of dry gas and coke.

The present invention provides accordingly a composition for the catalytic cracking of heavy oil, particularly suitable for preparing the required catalytic cracking metal pollution-resistant catalyst. The composition includes an acid-soluble first alumina and a non-acid-soluble second alumina present in a weight ratio of greater than or equal to 2:1. The acid-soluble first alumina source has an acid solubility of more than 90%, and the non-acid-soluble second alumina has an acid solubility of less than 50%, wherein the acid solubility of the alumina is tested as follows:
mixing an alumina sample with water at a solid content of 10% to obtain hydrous alumina,
acidifying and dissolving the hydrous alumina and hydrochloric acid with a concentration of 35% by weight in a ratio of 1:0.2 by weight of dry alumina to hydrochloric acid at 25 °C for 60 minutes, followed by
separating an undissolved alumina using a centrifuge, 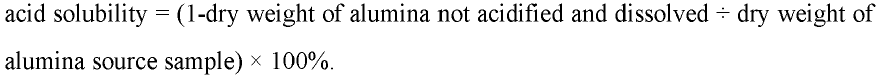 acid solubility = (1-dry weight of alumina not acidified and dissolved ÷ dry weight of alumina source sample) × 100%.

According to one embodiment of the present invention, the mass ratio of the acid-soluble first alumina to the non-acid soluble second alumina in the composition is 5: 1 to 20: 1.

According to the present invention, the composition further includes a material containing a modified metal Mn, which, based on the oxide MnO, accounts for 5-50%, preferably 10-40% by weight of the total weight of the material containing the modified metal Mn and the acid-soluble first alumina.

According to one embodiment of the present invention, the material containing the modified metal Mn is from manganese ore and/or other manganese compounds (e.g., manganese salts or/and manganese hydroxide), wherein, the main state of Mn in the manganese ore is MnO. As stated above, the inventors have found that the introduction of manganese sources by means of the combination of manganese ore (mainly MnO) and manganese salts can achieve an excellent equilibrium technical effect, and therefore, preferably, in one embodiment, the ratio of the manganese source from manganese ore (manganese oxide) and the manganese source from manganese salts is 5:1 to 1:5 in the material containing the modified metal Mn.

According to one embodiment of the present invention, the manganese ore includes but is not limited to one or more of soft manganese ore, hard manganese ore, water manganese ore, brown manganese ore, black manganese ore, rhodochrosite, etc., as well as other high-Mn intermediate industrial materials or products, such as electrolytic manganese, etc., preferably manganese ores or materials with a Mn content of greater than 60% based on MnO. The other manganese compounds refer to one or more of manganese salts and manganese hydroxide.

According to the present invention, the acid-soluble first alumina has an acid solubility of greater than 90%, which can be an acid-soluble alumina in solid form or the form of aluminum-containing sol itself. The acid-soluble first alumina in solid form can be one or more of gibbsite, boehmite, pseudo boehmite and bayerite, and the aluminum-containing sol can be one or more of amorphous aluminum gel, aluminum sol and phosphorus aluminum gel.

According to the present invention, the non-acid-soluble second alumina has an acid solubility of less than 50%, preferably an acid solubility of <35%, or an acid solubility of ≤30%, for example, 5-30%. The non-acid-soluble second alumina is preferably a non-acid-soluble second alumina with a large particle size and a large pore size, the median particle size of which is 1 µm-12 µm, preferably 4 µm-10 µm, for example, 4 µm-9 µm. The average pore size of the non-acid-soluble second alumina is preferably 4 nm-12 nm, with a specific surface area of >230 m²/g, for example >250 m²/g or 280-350 m²/g and a pore volume of >0.35 ml/g, for example 0.50-0.67 ml/g.

The non-acid-soluble second alumina may be one or more of pseudo boehmite, boehmite, γ alumina materials, etc., and is not limited thereto.

According to one embodiment of the present invention, in the metal pollution-resistant catalyst, the content of the material containing the modified metal Mn is 10-35% by weight, for example 15-30% by weight, and the content of the soluble alumina is 45-65% by weight, for example 50-60% by weight. The weight ratio of the soluble alumina to the modified metal oxide is preferably 1.5-10:1, for example 1.5-4:1.

According to one embodiment of the present invention, the composition further contains an additive oxide, preferably one or more of the oxides of P, B, RE. The additive oxide is preferably added in the form of being fixed to the non-acid-soluble second alumina, and based on the oxide of the additive element, the content of the additive compound in the non-acid-soluble second alumina is not more than 20% by weight, for example 0.5% by weight to 10% by weight (based on the total weight of the alumina and the additive oxide in the non-acid-soluble second alumina), wherein, the oxide of P is based on P₂O₅; the oxide of B is based on B₂O₃; the oxide of RE is based on RE₂O₃. In one embodiment, the phosphorus content in the non-acid-soluble second alumina does not exceed 10% by weight, for example 0.05-10% by weight; the content of B does not exceed 5% by weight, for example 0.01-2% by weight. The presence of the additive oxide in the non-acid-soluble second alumina can better reduce the ratio of hydrogen to methane, and compared with the catalyst without the additive, it can better ensure the synergistic effect with the main catalyst, resulting in a better cracking effect.

According to one embodiment of the present invention, the composition further contains an alkaline earth metal oxide as an adjuvant, wherein the alkaline earth metal is one or more of Mg, Ca, Sr and Ba. For example, the alkaline earth metal oxide adjuvant is calcium oxide and/or magnesium oxide and/or strontium oxide. The content of the alkaline earth metal oxide adjuvant does not exceed 20% by weight, preferably does not exceed 15% by weight, for example 0-10% by weight, for example 2-10% by weight, of the total weight of the metal pollution-resistant catalyst based on the oxide.

According to one embodiment of the present invention, the alkaline earth metal originates from one or more of alkaline earth metal hydroxide, alkaline earth metal salt, alkaline earth metal oxide, or natural mineral containing alkaline earth metal, such as hydrotalcite. Preferably, the alkaline earth metal adjuvant is preferably in the acid-soluble first alumina having a content of the alkaline earth metal oxide adjuvant not higher than the content of the material containing the modified metal Mn.

Furthermore, the present invention provides a metal pollution-resistant catalyst for catalytic cracking of heavy oil, which is obtained by the composition for catalytic cracking of heavy oil in the present invention through spray drying and calcining. The catalyst includes alumina and a material containing the modified metal Mn;
The content of the material containing the modified metal Mn is 5-40% by weight, based on MnO. After calcined at 550 °C for 3-4 hours, the composition was tested for surface hydroxyl groups using an infrared spectroscopy. There is a clear bimodal characteristic at 3670 cm⁻¹ and 3730 cm⁻¹ (the peak at 3670 cm⁻¹ is a surface-OH group of type IIIb with 0.75 positive charge, and the peak at 3730 cm⁻¹ is a surface-OH group of type IIa with 0.25 positive charge, and the two peaks have the ratio of the integral areas of 1-6: 1, for example 1-5: 1).

The method for the measurement of the surface hydroxyl characteristics is as follows: first, pressing the sample into a self-supporting sheet, weighing 15-20 mg of the sample, then putting the sample sheet into a reaction cell, purifying it under a vacuum condition of 10⁻³Pa and a temperature of 450 °C for 3 hours, followed by reducing the temperature to 90 °C to measure its infrared hydroxyl spectrum.

According to one embodiment of the present invention, the bulk specific weight (bulk density) of the metal pollution-resistant catalyst can be between 0.75 and 1.15 g/ml.

According to one embodiment of the present invention, the specific surface area of the metal pollution-resistant catalyst may be 100-250 m²/g.

According to one embodiment of the present invention, the water drop pore volume of the metal pollution-resistant catalyst may be 0.18-0.35 ml/g.

According to one embodiment of the present invention, the metal pollution-resistant catalyst may contain silica which can be that carried by the raw material or that added additionally.

Preferably, the SiO₂ content in the metal pollution-resistant catalyst of the present invention does not exceed 3% by weight.

Preferably, the content of sodium oxide in the metal pollution-resistant catalyst does not exceed 0.3% by weight.

The present invention also provides a method for preparing a metal pollution-resistant catalyst for heavy oil cracking and conversion, wherein a first embodiment comprises following steps:
(1) forming a slurry of an acid-soluble first alumina, a non-acid-soluble second alumina, water and optionally acid, referred to as a first slurry; the solid content of the first slurry is preferably 8-20% by weight. Preferably, a molar ratio of dissociable H⁺ to total alumina sources (including both gel-soluble alumina and non-gel-soluble alumina) calculated based on alumina in the first slurry is 0.1-0.3:1. The acid-soluble first alumina may be a solid acid-soluble first alumina and/or an aluminum-containing colloid.
   When the acid-soluble first alumina is an acid-soluble alumina comprising solids, it is preferred to add an acid to the first slurry to acidify and peptize the solid gel-soluble alumina source, wherein the molar ratio of the dissociable H⁺ in the acid to the sum of the solid acid-soluble first alumina and the non-acid-soluble second alumina calculated based on alumina is 0.05-0.3:1. Preferably, the molar ratio of acid to the sum of the solid acid-soluble first alumina and the non-acid-soluble second alumina calculated based on alumina is 0.12-0.18:1; the weight ratio of the acid-soluble first alumina to the non-acid-soluble second alumina calculated based on alumina is preferably 1.5:1-20:1, for example 3:1-10:1;
(2) mixing a product (the first slurry) obtained in step (1) with a material containing a modified metal Mn, for example by adding a dispersion liquid of the material containing the modified metal Mn, stirring evenly to form a second slurry; preferably, a solid content of the formed second slurry is 10-20% by weight,
(3) spray drying, calcining;
or, a second embodiment comprises following steps:
(S1) introducing a source of a material containing a modified metal Mn to an acid-soluble first alumina to form a slurry having a solid content of 8-30% by weight, stirring, for example, for 10 min to 60 min, giving a modified acid-soluble alumina source;
(S2) forming a slurry of a modified acid-soluble alumina source, a non-acid-soluble second alumina, optionally acid, and water, referred to as a third slurry, a solid content of the third slurry preferably being 10-20% by weight; preferably, a molar ratio of dissociable H⁺ to total alumina sources (including the acid-soluble first alumina and the non-acid-soluble second alumina) calculated based on alumina in the third slurry is 0.1-0.3:1; the acid-soluble first alumina may be a solid acid-soluble first alumina and/or an aluminum-containing colloid.

According to one embodiment of the present invention, the acid-soluble first alumina includes a solid acid-soluble alumina; an acid is introduced to the third slurry formed for acidifying and peptizing so as to peptize the solid acid-soluble first alumina under an action of acid. Preferably, a molar ratio of the dissociable H⁺ in the introduced acid to the sum of the solid acid-soluble first alumina and the non-acid-soluble second alumina calculated based on alumina is 0.1-0.3:1;

(S3) spray drying the third slurry, and calcining.

A method for preparing a metal pollution-resistant catalyst according to any one of the above technical solutions, wherein the first alumina in the metal-resistant catalyst is present as a continuous phase, and Mn and alkaline earth metal are present in a dispersed phase or uniformly in the first alumina. The second alumina is dispersed in the first alumina system, that is, the second alumina is present in a dispersed form.

A method for preparing a metal pollution-resistant catalyst according to any one of the above technical solutions, wherein the acid may be, for example, one or more of hydrochloric acid, sulfuric acid, nitric acid, but is not limited thereto.

A method for preparing a metal pollution-resistant catalyst according to any one of the above technical solutions, wherein the material containing modified metal Mn is an oxide of the modified metal or a salt of the modified metal, and the salt of the modified metal includes but is not limited to one or more of nitrate, chloride and sulfates of the modified metal element.

Preferably, the solid acid-soluble first alumina has an average pore size (diameter) of 2-10 nm; a specific surface area of >150 m²/g, for example, 200-300 m²/g; a pore volume of >0.30 ml/g, for example, 0.35-0.45 ml/g.

Preferably, the ratio of the acid-soluble first alumina calculated based on alumina to the modified metal oxide is 1.5-20:1 or 2:1-10:1 by weight;
According to one embodiment of the present invention, in the method for testing the acid solubility (or gel solubility), specifically:
a sample of an alumina source is mixed with water at a solid content of 10%, and acidified and peptized at 25°C for 60 min according to a mass ratio of alumina dry basis to hydrochloric acid (concentration: 35% by weight) of 1:0.2. Then, the alumina that has not yet been peptized is separated by a centrifuge, 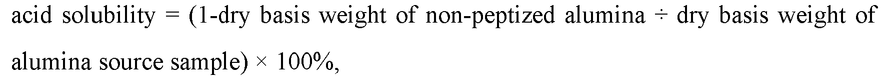 acid solubility = (1-dry basis weight of non-peptized alumina ÷ dry basis weight of alumina source sample) × 100%,
wherein, the dry basis is measured as follows: the weight of the solid product obtained after calcining the substance at 800°C for 1 hour.

The non-acid-soluble second alumina may contain one or more of the additive elements P, B, RE elements. For example, the non-acid-soluble second alumina is a macroporous alumina containing one or more of the oxides of P, B, RE elements, and/or an active alumina material containing one or more of the oxides of P, B, RE elements, but is not limited thereto. The manner of the introduction of additive elements may be adding them during the preparation of the non-acid-soluble second alumina material, or introducing them through impregnation after the non-acid-soluble second alumina is prepared, and fixing these non-aluminum additive elements. The additive elements may also be fixed by calcination of the non-acid-soluble second alumina, such as calcination at 500-650°C for 1-4 hours.

Preferably, one or more of compounds of P, B, RE elements (these elements are referred to as additive elements) are introduced into the non-acid-soluble second alumina, so that the additive elements are fixed in the alumina matrix. The compounds of the additive elements calculated based on oxides accounts for 0-20% by weight of the non-acid-soluble second alumina calculated based on alumina. Preferably, the compounds of the additive elements calculated based on oxides accounts for 0.5% to 10% by weight of the non-acid-soluble second alumina calculated based on alumina.

According to one embodiment of the present invention, the weight ratio of the acid-soluble first alumina to the non-acid-soluble second alumina, calculated based on alumina, is preferably 1.5:1 to 20:1 or 2:1 to 20:1 or 2:1 to 10:1.

According to one embodiment of the present invention, the method for preparing the metal pollution-resistant catalyst may further include a washing step. The washing is carried out after spray drying, preferably after calcination, and water may be used for washing. For example, the washing reduces the content of the anion (the anion is an acid radical, for example, a sulfate) in the catalyst, preferably, the content of the acid radical in the obtained metal pollution-resistant catalyst is decreased to be no more than 3% by weight.

According to one embodiment of the present invention, the method for preparing the metal pollution-resistant catalyst further comprises the step of introducing an alkaline earth metal source. The alkaline earth metal source may be added at any step during the preparation process without any particular limitation. For example, the alkaline earth metal source can be introduced in step (1) and/or step (2). Alternatively, the alkaline earth metal source is added in step (S1) and/or step (S2). The alkaline earth metal is, for example, one or more of Ca, Mg, Ba, Sr. The alkaline earth metal source is, for example, one or more of alkaline earth metal, oxide of alkaline earth metal, and salt of alkaline earth metals. The content (addition ratio) of the alkaline earth metal in the catalyst is 0-20% by weight, for example, not more than 15% by weight or 0-10% by weight, calculated based on oxides. Preferably, the alkaline earth metal source is added to a slurry containing the acid-soluble first alumina material and the non-acid-soluble second alumina material.

Adding an alkaline earth metal compounds helps improving the nickel-resistant performance of the metal pollution-resistant catalyst, and promotes the stability of the long-term operation in the actual catalytic cracking device. Alkaline earth metal oxides have a desulfurization property and a vanadium-resistant property, but an excessive addition amount will affect the performance of the metal-resistant catalyst per se of reducing the dehydrogenation effect of nickel.

The present invention further provides a catalytic cracking catalyst, comprising a microspherical particle containing a catalytic cracking active component and the metal pollution-resistant catalyst described in the present invention. The mass ratio of the metal pollution-resistant catalyst to the microspherical particle containing the catalytic cracking active component in the catalytic cracking catalyst is 3:97-20:80.

The microspherical particle containing the catalytic cracking active component may be a conventional catalytic cracking catalyst, for example, the microspherical particle containing the catalytic cracking active component contains 20-60% by weight of the cracking active component and 80-90% by weight of substrate. The cracking active component is, for example, one or more of Y-type molecular sieve, β molecular sieve and MFI-structured molecular sieve. The substrate is, for example, one or more of clay, alumina, aluminium oxide, zirconia. The microspherical particle containing the catalytic cracking active component has an average particle size of, for example, 60-80 microns.

The catalytic cracking metal pollution-resistant catalyst provided by the present invention has a good nickel pollution-resistant effect. When combined with a conventional catalyst in a certain proportion, it can still have a good nickel-resistant effect under the conditions of a high nickel content pollution and a lower modified metal, and reduce the ratio of hydrogen to methane in a hydrocarbon oil conversion.

The method for preparing the catalytic cracking metal pollution-resistant catalyst provided by the present invention can obtain a catalyst with a better effect resistant to the metal pollution under the condition of having a lower content of the modified metal.

The catalytic cracking metal pollution-resistant catalyst provided by the present invention, when mixed with a conventional catalytic cracking catalyst, can be used in the catalytic cracking of heavy oil under the condition of a higher content of the nickel pollution, and can significantly reduce the ratio of hydrogen to methane, as well as also reduce the yields of dry gas, hydrogen and/or coke. In a preferred case, it may have a higher yield of gasoline and LPG (liquefied petroleum gas).

The catalytic cracking metal pollution-resistant catalyst provided by the present invention may also have a good vanadium pollution-resistant effect. After being mixed with a cracking catalyst containing a Y-type molecular sieve, it can be used for a heavy oil conversion under the condition of vanadium and a higher content of the nickel pollution. Compared with the blank sample (without a metal pollution-resistant catalyst), it can have a lower ratio of hydrogen to methane, a lower yield of dry gas and/or a lower yield of coke and/or a lower yield of hydrogen. In a preferred case, it can have a good conversion activity and higher yields of gasoline and the liquefied petroleum gas. Compared with the catalytic cracking catalyst containing the existing metal pollution-resistant catalyst, it can have a significantly lower ratio of hydrogen to methane, and can have a higher conversion activity, as well as a good selectivity.

### Description of the Drawings

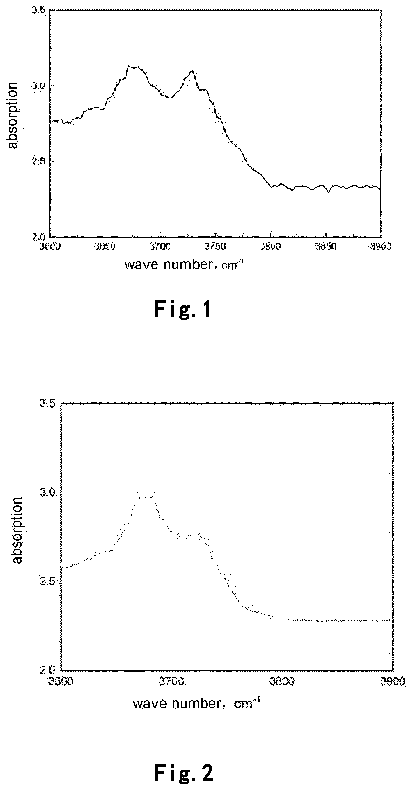

Figure 1 is a hydroxyl infrared spectrogram of 3600-3900 cm⁻¹ of the metal-resistant catalyst prepared in Example 1 after being dried and calcined at 550°C/3h; as shown in the figure, there is a clear bimodal distribution at the wave numbers of 3670 cm⁻¹ and 3730 cm⁻¹.
Figure 2 is a hydroxyl infrared spectrogram of Comparative Example 4.

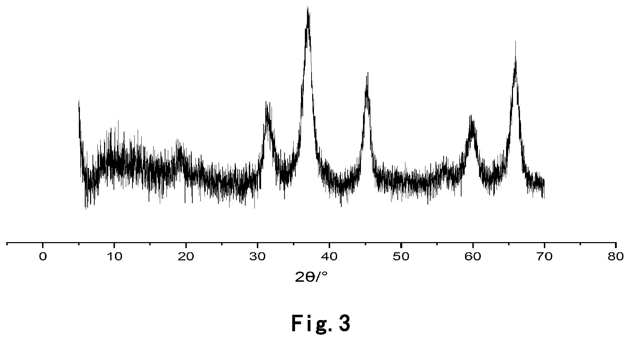

Figure 3 is an XRD spectrogram of Example 5, wherein there are clear peaks at 19°, 31.5°, 37°, 45.3°, 56°, 59° and 65.7°.

### Specific Embodiments

The following examples will further illustrate the present invention, but will not limit the present invention accordingly.

The raw materials used in the following examples are as follows:
Pseudo-boehmite is a product of Shandong Aluminum Co., Ltd. with a solid content of 67.0% by weight, an acid solubility of 98%, a pore volume of approximately 0.35 ml/g, a specific surface area of 248 m²/g, an average pore diameter of 3 nm, and an impurity SiO₂ content of 2.1%.

Non-acid-soluble alumina is from Qilu Branch of Sinopec Catalyst Co., Ltd., with an acid solubility of 12%, a pore volume of 0.37 ml/g, a specific surface area of 315 m²/g, an average pore diameter of 6 nm, an average particle size of 8.2 µm.

Alumina sol is a product of Qilu Branch of Sinopec Catalyst Co., Ltd., with an Al₂O₃ content of 21.5% by weight. It is in a colloidal state with a colloidal solubility of 100%. Manganese chloride is a commercial product of industrial manganese chloride tetrahydrate.

The manganese oxide ore powder is purchased from a manganese industry company in Hunan Province, China, and its composition is shown in Table 1:

| sample name | manganese ore |
|---|---|
| Na₂O. %(W) | 0.136 |
| MgO. %(W) | 0.273 |
| Al₂O₃. %(W) | 2.64 |
| SiO₂. %(W) | 4.83 |
| P₂O₅. %(W) | 0.07 |
| SO₃. %(W) | 0.1 |
| K₂O. %(W) | 1.35 |
| CaO. %(W) | 0.311 |
| MnO. %(W) | 82.65 |
| Fe₂O₃. %(W) | 5.14 |
| BaO. %(W) | 2.29 |
| PbO. %(W) | 0.21 |

The non-acid-soluble second alumina A and the non-acid-soluble second alumina B are obtained from Qilu Branch of Sinopec Catalyst Co., Ltd.

Non-acid-soluble second alumina A: alumina with a basic pseudo-boehmite structure, which has a median particle size of 8.4 µm, a specific surface area of 305 m²/g, a pore volume of 0.81 ml/g, an average pore size of 8.6 nm, an acid solubility of 7%.

Non-acid-soluble second alumina B: alumina with a basic pseudo-boehmite structure, which has a P content of 5.3%, a median particle size of 6.3 µm, a specific surface area of 325 m²/g, a pore volume of 0.64 ml/g, an average pore size of 4.8 nm, an acid solubility of 15%.

SB powder is purchased from SASOL company, with a BET surface area of 262 m²/g, a pore volume of 0.44 ml/g, an average pore size of 8 nm, an acid solubility of 95%, and can be an acid-soluble macroporous alumina material with a median particle size of approximately 6.6 µ M.

In the various examples and comparative examples, the content of each component in the sample is detected by an X-ray fluorescence method, as shown in ASTM D7085-04 (2010) Guide for the Standard of Chemical Element Detection in Fluidized Catalytic Cracking Catalysts - X-ray Fluorescence Spectroscopy Detection Guide.

Detection of the specific surface area of the sample: see: NB/SH/T 0959-2017 Detection of Specific Surface Area of Catalytic Cracking Catalysts, Static Nitrogen Adsorption Capacity Method;

The average pore size is determined by the low-temperature nitrogen adsorption-desorption method, and the pore size distribution is calculated by BJH method.

The pore volume is detected by the water drop method, NB/SH/T 0955-2017 Detection of Pore Volume of Catalytic Cracking Catalysts Water Drop Method.

The particle size and its distribution are detected using a laser particle size method, see NB/SH/T 0951-2017 Detection of Particle Size Distribution of Catalytic Cracking Catalysts Laser Scattering Method. Therein, for example, for the acid-soluble alumina, a non-aqueous solvent such as ethanol or ether are required for testing.

Wear index measurement: NB/SH/T 0964-2017 Detection of Wear Index of Catalytic Cracking Catalysts Straight Tube Method.

### Examples

### Preparation Example 1

To 200 parts by mass (based on a dry basis, a product of Shandong Aluminum Company) of pseudo boehmite, deionized water and 24 parts by mass of hydrochloric acid with a concentration of 35 % by mass were added, and an acidified boehmite with a solid content of 12% by mass was prepared through beating; then, 100 parts by mass (based on a dry basis) of an aluminum sol, 340 parts by mass (based on a dry basis) of kaolin and 360 parts by mass (based on a dry basis) of DASY2.0 molecular sieve (a product of Qilu Branch of Sinopec Catalyst Co., Ltd.) were added, stirred for 0.5h, and spray dried, then calcined at 550 °C for 2h, followed by washing with ammonium chloride solution with a concentration of 2% by mass twice, to give a catalytic cracking catalyst microsphere, which is recorded as Cat-A. The basic chemical composition of Cat-A is shown in Table 2. The chemical composition is detected by X-ray fluorescence (XRF). See ASTM D7085-04(2010) Guide for the Standard of Detection of Chemical Elements in Fluid Catalytic Cracking Catalysts - Guide for Detection by X-Ray Fluorescence Spectrometry.

**Table 2**

| component name | Cat-A |
|---|---|
| Cl. %(W) | 0.490 |
| Na₂O. %(W) | 0.0458 |
| Al₂O₃. %(W) | 53.4 |
| SiO₂. %(W) | 42.7 |
| P₂O₅. %(W) | 0.107 |
| SO₃. %(W) | 1.67 |
| K₂O. %(W) | 0.196 |
| CaO. %(W) | 0.057 |
| TiO. %(W) | 0.288 |
| La₂O₃. %(W) | 0.309 |
| CeO₂. %(W) | 0.607 |

### Example 1

(1) 55g (based on Al₂O₃) of pseudo-boehmite and 12g of non-acid-soluble second alumina material A (based on oxide) were added to deionized water to formulate a slurry with a solid content of 14% by weight, which was stirred for 60 min at a condition of 300r/min (referring to the stirring speed, the same below) to evenly disperse. Then, 9g of hydrochloric acid (containing 35% by weight of HCl) were added, and stirred for 60 min at the condition of 250r/min to fully peptize the acid-soluble first alumina material to give a first slurry.
(2) 10g of manganese trichloride (based on MnO) and 18g of manganese ore powder (wherein Mn is about 15g calculated based on MnO) were added to deionized water, fully dispersed and added to the first slurry, which was fully stirred before the addition of 5g of MgO (based on a dry basis) to give a second slurry with a solid content of 13% by weight;
(3) The second slurry was spray dried and molded, and then calcined at 550 °C for 4h to obtain a metal-resistant catalyst A1, wherein the microspheres with particle sizes in the range of 0-149 µm accounted for 91% by volume, and the microspheres with particle sizes in the range of 0-40 µm accounted for 17% by volume. The average particle size (APS) of the microspheres was 72 µm.

The formulation, the preparation parameters, the bulk density and the wear index of A1 are listed in Table 3.

### Example 2 (without alkaline earth metal)

(1) 50g (based on Al₂O₃) of pseudo-boehmite and 22g of non-acid-soluble second alumina material B (based on oxide) were added to deionized water to formulate a slurry with a solid content of 13% by weight, which was stirred for 60 min at a condition of 300r/min (referring to the stirring speed, the same below) to evenly disperse. Then, 10g of hydrochloric acid (containing 35% by weight of HCl) were added, and stirred for 60 min at the condition of 250r/min to fully peptize the acid-soluble first alumina material to give a first slurry.
(2) 10g of manganese trichloride (based on MnO) and 18g of manganese ore powder (wherein Mn is about 15g calculated based on MnO) were added to deionized water, fully dispersed and then added to the first slurry to give a second slurry with a solid content of 14% by weight;
(3) The second slurry was spray dried and molded, and then calcined at 550 °C for 4h to obtain a metal-resistant catalyst A1, wherein, the microspheres with particle sizes in the range of 0-149 µm accounted for 93% by volume, and the microspheres with particle sizes in the range of 0-40 µm accounted for 16% by volume. The average particle size (APS) of the microspheres was 68 µm.

The formulation, the preparation parameters, the bulk density and the wear index of A1 are listed in Table 3.

### Example 3 (pure manganese powder)

(1) 53g (based on Al₂O₃) of pseudo-boehmite and 12g of non-acid-soluble second alumina material A (based on oxide) were added to deionized water to formulate a slurry with a solid content of 14% by weight, which was stirred for 60 min at a condition of 300r/min (referring to the stirring speed, the same below) to evenly disperse. Then, 9g of hydrochloric acid (containing 35% by weight of HCl) were added, and stirred for 60 min at the condition of 250r/min to fully peptize the acid-soluble first alumina material to give a first slurry.
(2) 30g of manganese ore powder (wherein Mn is about 25g calculated based on MnO) were added to deionized water and then fully ground into a slurry, which was added to the first slurry and fully stirred before the addition of 5g of MgO (based on a dry basis) to give a second slurry with a solid content of 16% by weight;
(3) The second slurry was spray dried and molded, and then calcined at 550 °C for 4h to obtain a metal-resistant catalyst A1, wherein, the microspheres with particle sizes in the range of 0-149 µm accounted for 95% by volume, and the microspheres with particle sizes in the range of 0-40 µm accounted for 15% by volume. The average particle size (APS) of the microspheres was 73 µm.

The formulation, the preparation parameters, the bulk density and the wear index of A1 are listed in Table 3.

### Example 4 (pure manganese salt, a higher content of alkaline earth metal)

(1) 50g (based on Al₂O₃) of pseudo-boehmite were added to deionized water to formulate a slurry with a solid content of 14% by weight, which was stirred for 60 min at a condition of 300r/min (referring to the stirring speed, the same below) to evenly disperse. Then, 9g of hydrochloric acid (containing 35% by weight of HCl) were added, and stirred for 60 min at the condition of 250r/min to fully peptize the acid-soluble first alumina material to give a first slurry.
(2) 20g of manganese trichloride (based on MnO) were added to deionized water, fully dispersed and then added to the first slurry, and fully stirred before the addition of 10g of CaO (based on a dry basis) and 20g of non-acid-soluble second alumina material A (based on oxide) to give a second slurry with a solid content of 13% by weight;
(3) The second slurry was spray dried and molded, and then calcined at 550 °C for 4h to obtain a metal-resistant catalyst A1, wherein, the microspheres with particle sizes in the range of 0-149 µm accounted for 91% by volume, and the microspheres with particle sizes in the range of 0-40 µm accounted for 19% by volume. The average particle size (APS) of the microspheres was 66 µm.

The formulation, the preparation parameters, the bulk density and the wear index of A1 are listed in Table 3.

### Comparative Example 1

(1) 60g (based on Al₂O₃) of pseudo-boehmite and 30g of non-acid-soluble second alumina material A (based on oxide) were added to deionized water to formulate a slurry with a solid content of 15% by weight, which was stirred for 60 min at a condition of 300r/min to evenly disperse. Then, 12g of hydrochloric acid (containing 35% by weight of HCl) were added, and then beaten and stirred for 60 min at the condition of 250r/min to fully peptize the acid-soluble first alumina material to give a first slurry;
(2) 10g of MgO (based on a dry basis) were added to the first slurry, fully stirred to then give a second slurry, which was spray dried and molded, and then calcined at 550 °C for 4h to obtain a metal-resistant catalyst B1, wherein, the microspheres with particle sizes in the range of 0-149 µm accounted for 92% by volume, and the microspheres with particle sizes in the range of 0-40 µm accounted for 13% by volume. The average particle size (APS) of the microspheres was 79 µm.

### Comparative Example 2

(1) 120g (based on Al₂O₃) of pseudo-boehmite were added to deionized water, fully dispersed, and then manganese oxide (containing 50g MnO) was added, and dispersed evenly before hydrochloric acid was added, and after contacting for 30 min to give a first slurry with a pH value of 3 and a solid content of 12% by weight;
(2) Then, a deionized water-dispersed MgO slurry (containing 650g of MgO) was added, and a second slurry with a pH value of 7.8 and a solid content of 18% by weight was obtained after 60 minutes of contact under a temperature controlled at 55 °C;
(3) Then, 180g of non-acid-soluble second alumina A (based on Al₂O₃) were added to give a third slurry, and the contact at a room temperature (25 °C) lasted for 15 min;
(4) The third slurry was spray dried and molded before being directly calcined under the condition of 550°C/2h to give a catalyst B2.

### Comparative Example 3

(1) 75g (based on Al₂O₃) of pseudo-boehmite were formulated into a slurry with a solid content of 15% by weight, and beaten and stirred for 60 min at a condition of 300r/min to evenly disperse. Then 15g of hydrochloric acid (containing 35% by weight of HCl) were added, and then beaten and stirred for 60 min at a condition of 250r/min and fully peptized to give a first slurry.
(2) Manganese trichloride (25g calculated based on MnO) was added to deionized water, fully dissolved and then added to the first slurry, and further fully stirred to give a second slurry with a solid content of 13% by weight;
(3) The second slurry was spray dried and molded, and then calcined at 550 °C for 4h to give a metal-resistant catalyst B3.

### Comparative Example 4 With reference to the examples of CN103785346B

(1) 65g (based on Al₂O₃) of pseudo-boehmite were added to deionized water, dispersed evenly, and then manganese trichloride (containing 20g of MnO) was added, and beaten and stirred at a condition of 250r/min for 60 minutes. After a full dispersion, 15g of hydrochloric acid were added, and beaten and stirred at a condition of 250r/min for 30 minutes to give a first slurry with a solid content of 12% by weight;
(2) Then, 15g of acid-soluble large-particle-size SB powder (soluble macroporous alumina) (based on Al₂O₃) were added, and beaten and stirred at a condition of 250r/min for 60 minutes to give a third slurry.
(3) The third slurry was spray dried and molded before being directly calcined at 550 °C/4h to give a solid B4.

### Comparative Example 5

(1) 50g (based on Al₂O₃) of pseudo-boehmite were added to deionized water to formulate a slurry with a solid content of 14% by weight, which was stirred for 60 min at a condition of 300r/min (referring to the stirring speed, the same below) to evenly disperse. Then, 9g of hydrochloric acid (containing 35% by weight of HCl) were added, and stirred for 60 min at the condition of 250r/min to fully peptize the acid-soluble first alumina material to give a first slurry.
(2) 20g of manganese trichloride (based on MnO) were added to deionized water, fully dispersed and then added to the first slurry, and fully stirred before the addition of 10g of CaO (based on a dry basis) and 20g of kaolin (based on solid oxide) to give a second slurry with a solid content of 13% by weight.
(3) The second slurry was spray dried and molded, and then calcined at 550 °C for 4h to obtain a metal-resistant catalyst A1, wherein, the microspheres with particle sizes in the range of 0-149 µm accounted for 91% by volume, and the microspheres with particle sizes in the range of 0-40 µm accounted for 19% by volume. The average particle size (APS) of the microspheres was 66 µm.

The formulation, the preparation parameters, the bulk density and the wear index of A1 are listed in Table 3.

The formulations, the preparation parameters, the bulk densities and the wear indexes of B1, B3 and B4 are listed in Table 3.

**Table 3**

| Example number | Example 1 | Example 2 | Example 3 | Example 4 | Comparative Example 1 | Comparative Example 3 | Comparative Example 4 |
|---|---|---|---|---|---|---|---|
| metal pollution-resistant catalyst number | A1 | A2 | A3 | A4 | B1 | B3 | B4 |
| soluble alumina content, % by weight | 55 | 50 | 53 | 50 | 60 | 75 | 65 |
| non-acid-soluble second alumina content, % by weight | 12 | 22 | 12 | 20 | 30 | 0 | 15 |
| manganese salt based on MnO, % by mass | 10 | 10 | | 20 | | 25 | 20 |
| manganese ore powder, % by mass | 18 | 18 | 30 | | | | |
| modified metal oxide content, % by weight | 25 | 25 | 25 | 20 | 0 | 25 | 20 |
| alkaline earth metal oxide content, % by weight | 5 | 0 | 5 | 10 | 10 | 0 | 0 |
| integral area ratio of peaks at wave numbers 3670 cm⁻¹ and 3730 cm⁻¹ in Infrared spectroscopy | 2.1:1 | 2.7:1 | 3:1 | 1.5:1 | 1:1.3 | 7.1:1 | 6.2:1 |
| sodium oxide, % by weight | 0.25 | 0.24 | 0.28 | 0.21 | 0.22 | 0.26 | 0.24 |
| SiO₂, % by weight | 2.4 | 2.3 | 2.7 | 2.0 | 2.2 | 2.4 | 2.5 |
| specific surface area, m²/g | 142 | 178 | 156 | 154 | 151 | 128 | 138 |
| water drop pore volume, ml/g | 0.31 | 0.35 | 0.32 | 0.31 | 0.33 | 0.25 | 0.28 |
| bulk specific weight, g/ml | 0.89 | 0.84 | 0.92 | 0.85 | 0.96 | 1.25 | 1.13 |

### Examples 5-9

The metal pollution-resistant catalysts A1, A2, A3, A4, and A5 were respectively mixed with Cat-A at a weight ratio of 10:90 to give catalytic cracking catalysts C1, C2, C3, C4 and C5. These catalytic cracking catalysts were respectively subjected to a pollution on the ACE D100 device by using a cyclic pollution method, in which nickel naphthenate and vanadium naphthenate were dissolved in a distillate oil at a mass ratio of 5:2 for multiple cyclic reactions until the Ni on the catalyst reached approximately 4500 ppm (mass) and V reached 1800 ppm. The sample numbers of C1, C2, C3, C4, C5 after the cyclic pollution were C1w, C2w, C3w, C4w, C5w respectively. Then, the samples C1w-C5w were aged by a fixed bed at 800°C and 100% by volume of water vapor for 15 hours, and then evaluated using an ACE fluidized bed device. The properties of the feedstock oil evaluated by ACE are shown in Table 4, and the evaluation conditions and the results are shown in Table 5.

### Comparative Examples 6-10

These examples illustrate the metal-resistant property of the catalyst for the heavy oil cracking provided by the present invention.

Catalyst Cat-A was mixed with B1, B2, B3 and B4 in a weight ratio of 90: 10 to obtain the catalytic cracking catalysts D1, D2, D3 and D4. D1, D2, D3, D4 and Cat-A were respectively subjected to a pollution on the ACE D100 device by using a cyclic pollution method, in which nickel naphthenate and vanadium naphthenate were dissolved in a distillate oil at a mass ratio of 5:2 for multiple cyclic reactions until the Ni on the catalyst reached a mass of approximately 4500 ppm and V reached 1800 ppm. The sample numbers after the cyclic pollution were respectively D1w, D2w, D3w, D4w and Cat-Aw in sequence. The samples were then aged by a fixed bed at 800°C and 100% water vapor for 15 hours, and then evaluated using an ACE fluidized bed device. The properties of the feedstock oil evaluated by ACE are shown in Table 3, and the evaluation conditions and the results are shown in Table 4.

### Comparative Example 11

To 200g (based on a dry basis, a product of Shandong Aluminum Company) of pseudo boehmite, deionized water and 24 g of hydrochloric acid with a concentration of 35% by mass were added, and an acidified boehmite with a solid content of 12% by mass was prepared through beating; Then, 100g (based on a dry basis) of an aluminum sol, 320g (based on a dry basis) of kaolin, 20g of manganese chloride (based on MnO) and 360g (based on a dry basis) of DASY2.0 molecular sieve (a product of Qilu Branch of Sinopec Catalyst Co., Ltd.) were added, stirred for 0.5h, spray dried, calcined at 550 °C for 2h, then followed by washing with ammonium chloride solution with a concentration of 2% by mass twice to give a basic catalytic cracking catalyst precursor microsphere, which is recorded as Cat-E.

Cat-E was subjected to a pollution on the ACE D100 device by using a cyclic pollution method, in which nickel naphthenate and vanadium naphthenate were dissolved in a distillate oil at a mass ratio of 5:2 for multiple cyclic reactions until the Ni on the catalyst reached a mass of approximately 4500 ppm and V reached 1800 ppm. The sample number after the cyclic pollution was Cat-Ew respectively. The sample was then aged by a fixed bed at 800°C and 100% water vapor for 15 hours, and then evaluated using an ACE fluidized bed device. The properties of the feedstock oil evaluated by ACE are shown in Table 3, and the evaluation conditions and the results are shown in Table 4.

**Table 3**

| | ACE evaluation |
|---|---|
| feedstock oil | Wuhan mixed feedstock oil |
| density (20°C), g/cm³ | 0.9044 |
| refraction (20°C) | 1.5217 |
| viscosity (100°C) mm²/s | 9.96 |
| solidifying point , °C | 40 |
| aniline point, °C | 95.8 |
| C m% | 85.98 |
| H m% | 12.86 |
| S m% | 0.55 |
| N m% | 0.18 |
| carbon residue | 3.0 |
| distillation range, °C | |
| initial boiling point | 243 |
| 5% | 294 |
| 10% | 316 |
| 30% | 395 |
| 50% | 429 |
| 70% | 473 |
| 90% | - |

**Table 4**

| Examples | Example 5 | Example 6 | Example 7 | Example 8 | Comparative Example 10 | Comparative Example 6 | Comparative Example 7 | Comparative Example 8 | Comparative Example 9 | Comparative Example 11 |
|---|---|---|---|---|---|---|---|---|---|---|
| pollution catalyst number | C1w | C2w | C3w | C4w | Cat-Aw | D1w | D2w | D3W | D4W | Cat-Ew |
| catalytic cracking reaction temperature, °C | 500 | 500 | 500 | 500 | 500 | 500 | 500 | 500 | 500 | 500 |
| ratio of catalyst to oil, wt/wt | 4.02 | 4.02 | 4.02 | 4.02 | 4.02 | 4.02 | 4.02 | 4.02 | 4.02 | 4.02 |
| yield, wt%: | | | | | | | | | | |
| dry Gas | 1.57 | 1.61 | 1.76 | 1.56 | 1.96 | 1.84 | 1.88 | 1.82 | 1.74 | 1.78 |
| LPG | 12.57 | 12.54 | 12.74 | 12.45 | 12.22 | *12.55* | 12.23 | 12.38 | 12.41 | 12.17 |
| coke | 8.58 | 8.65 | 8.82 | 8.45 | 9.22 | 9.03 | 9.27 | 8.71 | 8.83 | 8.99 |
| gasoline | 37.94 | 37.96 | 38.27 | 37.27 | 35.73 | 34.76 | 37.46 | 36.06 | 36.57 | 34.09 |
| LCO | 16.78 | 16.83 | 16.25 | 17.12 | 17.91 | 17.97 | 16.67 | 18.30 | 17.82 | 18.75 |
| heavy oil | 22.56 | 22.41 | 22.15 | 23.15 | 22.96 | 23.85 | 22.46 | 22.73 | 22.63 | 24.22 |
| | 100.00 | 100.00 | 100.00 | 100.00 | 100.00 | 100 | 99.97 | 100 | 100 | 100 |
| H₂ | 0.17 | 0.18 | 0.21 | 0.16 | 0.45 | 0.36 | 0.41 | 0.31 | 0.32 | 0.36 |
| methane | 0.67 | 0.68 | 0.65 | 0.66 | 0.71 | 0.65 | 0.67 | 0.64 | 0.65 | 0.64 |
| conversion rate, wt% | 60.66 | 60.76 | 61.60 | 59.73 | 59.13 | 58.18 | 60.84 | 58.97 | 59.55 | 57.03 |
| Ratio of hydrogen to methane (molar ratio) | 2.03 | 2.12 | 2.58 | 1.94 | 5.07 | 4.43 | 4.90 | 3.88 | 3.94 | 4.50 |

It can be derived from the data in Table 4 that some comparative examples also have a certain property in terms of reducing the ratio of hydrogen to methane. However, the catalyst provided by the present invention, when used for the conversion of heavy oil after being mixed with conventional catalytic cracking catalysts, has a lower yield of hydrogen, a lower yield of dry gas, a lower yield of coke and an clearly lower ratio of hydrogen to methane, under the condition of vanadium and a high content of nickel pollution. **In** a preferred case, it has a higher conversion activity and higher yields of gasoline and the liquefied petroleum gas.

## Claims

1. A composition for catalytic cracking of heavy oil, comprising
an acid-soluble first alumina and a non-acid-soluble second alumina present in a weight ratio of greater than or equal to 2:1, the acid-soluble first alumina source having an acid solubility of more than 90%, and the non-acid-soluble second alumina having an acid solubility of less than 50%, and
a material containing a modified metal Mn, which, based on oxide MnO, accounts for 5-50% by weight of the material containing the modified metal Mn and the acid-soluble first alumina;
wherein the acid solubility of the alumina is tested as follows:
mixing an alumina sample with water at a solid content of 10% to obtain a hydrous alumina,
acidifying and dissolving the hydrous alumina and hydrochloric acid with a concentration of 35% by weight in a ratio of 1:0.2 by weight of dry alumina to hydrochloric acid at 25 °C for 60 minutes, followed by separating an undissolved alumina using a centrifuge, 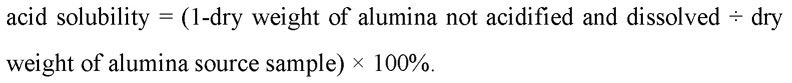 acid solubility = (1-dry weight of alumina not acidified and dissolved ÷ dry weight of alumina source sample) × 100%.

2. The composition according to claim 1, wherein the acid-soluble first alumina and the non-acid-soluble second alumina are in a mass ratio of 5:1 to 20:1.

3. The composition according to claim 1, wherein the material containing the modified metal Mn, accounts, based on oxide MnO, for 10-40% of a total weight of the material containing the modified metal Mn and the acid-soluble first alumina;
preferably, the material containing the modified metal Mn originates from manganese ore and/or other manganese compounds, preferably, based on manganese oxide, a weight ratio of the manganese ore to the other manganese compounds being 5:1 to 1:5; the manganese ore includes one or more of soft manganese ore, hard manganese ore, water manganese ore, brown manganese ore, black manganese ore, rhodochrosite and
a high-Mn intermediate industrial material such as electrolytic manganese; the manganese ore has a Mn content of greater than 60% based on MnO; the other manganese compounds are one or more of manganese salt, manganese hydroxide.

4. The composition according to any one of the preceding claims, **characterized in that** the composition further comprises an alkaline earth metal oxide, the alkaline earth metal being one or more of Mg, Ca, Sr and Ba; the content of the alkaline earth metal, based on oxide, does not exceed 20% by weight, for example 2-10% by weight, of the metal-resistant catalyst.

5. The composition according to claim 1, wherein the acid-soluble first alumina is in a form of a solid acid-soluble alumina or a form of an aluminum-containing sol;
the solid acid-soluble alumina is one or more of gibbsite, boehmite, pseudo boehmite, and bayerite, the aluminum-containing sol is selected from one or more of an amorphous aluminum gel, an aluminum sol and a phosphorus aluminum gel.

6. The composition according to claim 1, wherein the non-acid-soluble second alumina is a non-acid-soluble second alumina with a large particle size and a large pore size, the non-acid-soluble second alumina having an acid solubility of <35%, a median particle size of 1 µm-12 µm, preferably 4 µm-10 µm, an average pore size of 4 nm to 12 nm, a specific surface area of >230m²/g, and/or a pore volume of >0.35ml/g;
the non-acid-soluble second alumina is selected from one or more of pseudo boehmite, boehmite and γ alumina material.

7. The composition according to claim 1, **characterized in that** the composition further contains an additive oxide, which is selected from one or more of oxides of P, B, RE; the additive oxide is preferably added in a form of being fixed to the non-acid-soluble second alumina, and the content of the additive oxide in the non-acid-soluble second alumina is not more than 10% by weight, for example 0.5% by weight to 5% by weight, based on a total weight of the non-acid-soluble second alumina and the additive oxide; wherein, the oxide of P is based on P₂O₅, the oxide of B is based on B₂O₃, and the oxide of RE is based on RE₂O₃.

8. A metal pollution-resistant catalyst, which is obtained from the composition according to any one of claims 1-7 through spray drying and calcining, wherein after calcined at 550 °C for 3-4 hours, the composition was tested for surface hydroxyl groups by using an infrared spectroscopy, and two peaks at 3670 cm⁻¹ and 3730 cm⁻¹ have a ratio of integral areas of 1-6:1.

9. The metal pollution-resistant catalyst according to claim 8, **characterized in that** the metal pollution-resistant catalyst has a bulk specific weight of 0.75-1.15 g/ml, a specific surface area of 100-250 m²/g, a water drop pore volume of 0.18-0.35 ml/g, preferably, the SiO₂ content in the catalyst does not exceed 3% by weight; preferably, the content of sodium oxide in the metal pollution-resistant catalyst does not exceed 0.3% by weight;
preferably, the acid-soluble first alumina in the metal pollution-resistant catalyst is present as a continuous phase, and Mn and the alkaline earth metal, when being contained, are distributed in a dispersed phase or uniformly in the continuous phase of the acid-soluble first alumina; the non-acid-soluble second alumina is present in a dispersed form, and is dispersed in the continuous phase of the acid-soluble first alumina.

10. A method for preparing the metal pollution-resistant catalyst according to any one of claims 8-9, comprising following steps:
a first technical solution:
(1) forming a slurry of an acid-soluble first alumina, a non-acid-soluble second alumina, water and optionally acid to obtain a first slurry, and a solid content of the first slurry is preferably 8-20% by weight, preferably, a molar ratio of dissociable H⁺ to a total alumina source based on alumina in the first slurry is 0.05-0.3:1; the acid-soluble first alumina is a solid acid-soluble first alumina and/or an aluminum-containing colloid;
(2) adding a material containing a modified metal Mn, for example a manganese salt and a dispersion liquid containing manganese ore, to the first slurry obtained in step (1), stirring them evenly to form a second slurry; preferably, the formed second slurry has a solid content of 10-20% by weight.
(3) spray drying, calcining;
or, a second technical solution:
(S1) introducing a material containing a modified metal Mn to an acid-soluble first alumina to form a slurry having a solid content of 8-30% by weight, stirring to obtain a modified acid-soluble alumina source;
(S2) forming a third slurry of the modified acid-soluble alumina source, a non-acid-soluble second alumina, water and optionally acid, a solid content of the third slurry preferably being 10-20% by weight; preferably, a molar ratio of dissociable H⁺ to a total alumina source based on alumina in the third slurry is 0.05-0.3:1; the acid-soluble first alumina may be a solid acid-soluble first alumina and/or an aluminum-containing colloid;
(S3) spray drying and calcining the third slurry.

11. The method according to claim 10, **characterized in that**,
for the first technical solution: in step (1), the acid-soluble first alumina comprises a solid acid-soluble first alumina; an acid is added to the first slurry for acidifying and peptizing, wherein, a molar ratio of dissociable H⁺ in the acid to a sum of the solid acid-soluble first alumina and the non-acid-soluble second alumina based on alumina is 0.05-0.3:1;
for the second technical solution: in step (S1), the acid-soluble first alumina comprises a solid acid-soluble alumina; an acid is introduced to the third slurry in step (S2) for acidifying and peptizing, preferably, a molar ratio of dissociable H⁺ in the acid to a sum of the solid acid-soluble first alumina and the non-acid-soluble second alumina based on alumina is 0.05-0.3:1.

12. The method according to claim 10, **characterized in that**, based on alumina, in the first technical solution and the second technical solution separately, a weight ratio of the acid-soluble first alumina to the non-acid-soluble second alumina is 1.5:1-20:1 or 2:1-10:1.

13. The method according to claim 10, **characterized in that**, it further comprises a step of introducing an alkaline earth metal source which can be introduced in step (1) and/or step (2), or, the alkaline earth metal source is added in (S1) and/or (S2); the alkaline earth metal source is one or more of metal salt and/or metal oxide and/or hydroxide of Ca, Mg, Ba and Sr; the alkaline earth metal source is introduced in an amount such that a content of the alkaline earth metal in the metal pollution-resistant catalyst obtained is 0-20% by weight, for example, 0-10% by weight, based on oxide.

14. The method according to claim 10, **characterized in that** the manganese-containing ore is optionally ground to have a median particle size of 0.005-15 microns, preferably 1-10 microns; when used, a grinding method comprises a wet grinding, a dry grinding, a ball grinding, a sand grinding.

15. A catalytic cracking catalyst, comprising a microspherical particle containing catalytic cracking active components and a metal pollution-resistant catalyst which is the metal pollution-resistant catalyst according to any one of claims 8-9; a mass ratio of the metal pollution-resistant catalyst to the microspherical particle containing a catalytic cracking active component is 5:95-20:80.

## Patentansprüche

1. Zusammensetzung zum katalytischen Cracken von Schweröl, umfassend
ein säurelösliches erstes Aluminiumoxid und ein nicht säurelösliches zweites Aluminiumoxid, die in einem Gewichtsverhältnis von größer als oder gleich 2:1 vorliegen, wobei die säurelösliche erste Aluminiumoxidquelle eine Säurelöslichkeit von mehr als 90 % aufweist und das nicht säurelösliche zweite Aluminiumoxid eine Säurelöslichkeit von weniger als 50 % aufweist, und
ein Material, das ein modifiziertes Metall Mn enthält, welches, basierend auf dem Oxid MnO, 5-50 Gew.-% des Materials ausmacht, das das modifizierte Metall Mn und das säurelösliche erste Aluminiumoxid enthält;
wobei die Säurelöslichkeit des Aluminiumoxids wie folgt geprüft wird:
Mischen einer Aluminiumoxidprobe mit Wasser bei einem Feststoffgehalt von 10 %, um wasserhaltiges Aluminiumoxid zu erhalten,
Ansäuern und Auflösen des wasserhaltigen Aluminiumoxids mit Salzsäure mit einer Konzentration von 35 Gew.-% in einem Gewichtsverhältnis von 1:0,2 von trockenem Aluminiumoxid zu Salzsäure bei 25 °C für 60 Minuten, gefolgt von
Abscheiden von ungelöstem Aluminiumoxid unter Verwendung einer Zentrifuge, 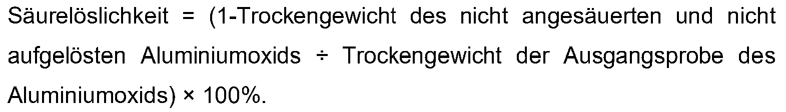 Säurelöslichkeit = (1-Trockengewicht des nicht angesäuerten und nicht aufgelösten Aluminiumoxids ÷ Trockengewicht der Ausgangsprobe des Aluminiumoxids) × 100%.

2. Zusammensetzung nach Anspruch 1, wobei das säurelösliche erste Aluminiumoxid und das nicht säurelösliche zweite Aluminiumoxid in einem Massenverhältnis von 5:1 bis 20:1 vorliegen.

3. Zusammensetzung nach Anspruch 1, wobei das Material, das das modifizierte Metall Mn enthält, basierend auf dem Oxid MnO, 10-40 % des Gesamtgewichts des Materials ausmacht, das das modifizierte Metall Mn und das säurelösliche erste Aluminiumoxid enthält;
vorzugsweise, wobei das Material, das das modifizierte Metall Mn enthält, von Manganerz und/oder anderen Manganverbindungen, vorzugsweise basierend auf Manganoxid, stammt, wobei ein Gewichtsverhältnis von Manganerz zu den anderen Manganverbindungen 5:1 bis 1:5 beträgt; wobei das Manganerz eines oder mehrere einschließt von weichem Manganerz, hartem Manganerz, wasserhaltigem Manganerz, braunem Manganerz, schwarzem Manganerz, Rhodochrosit und einem industriellen Zwischenmaterial mit hohem Mn-Gehalt, wie beispielsweise elektrolytischem Mangan; wobei das Manganerz einen Mn-Gehalt von mehr als 60 %, basierend auf MnO, aufweist; wobei die anderen Manganverbindungen eines oder mehrere von Mangansalz, Manganhydroxid sind.

4. Zusammensetzung nach einem der vorstehenden Ansprüche, **dadurch gekennzeichnet, dass** die Zusammensetzung weiter ein Erdalkalimetalloxid umfasst, wobei das Erdalkalimetall eines oder mehrere von Mg, Ca, Sr und Ba ist; wobei der Gehalt an Erdalkalimetall, basierend auf Oxid, 20 Gew.-%, beispielsweise 2-10 Gew.-%, des metallbeständigen Katalysators nicht überschreitet.

5. Zusammensetzung nach Anspruch 1, wobei das säurelösliche erste Aluminiumoxid in Form eines festen säurelöslichen Aluminiumoxids oder in Form eines aluminiumhaltigen Sols vorliegt;
wobei das feste säurelösliche Aluminiumoxid eines oder mehrere von Gibbsit, Böhmit, Pseudoböhmit und Bayerit ist, das aluminiumhaltige Sol ausgewählt ist aus einem oder mehreren von einem amorphen Aluminiumgel, einem Aluminiumsol und einem Phosphor-Aluminiumgel.

6. Zusammensetzung nach Anspruch 1, wobei das nicht säurelösliche zweite Aluminiumoxid ein nicht säurelösliches zweites Aluminiumoxid mit einer großen Partikelgröße und einer großen Porengröße ist, wobei das nicht säurelösliche zweite Aluminiumoxid eine Säurelöslichkeit von <35 %, eine mittlere Partikelgröße von 1 µm - 12 µm, vorzugsweise 4 µm - 10 µm, eine durchschnittliche Porengröße von 4 nm - 12 nm, eine spezifische Oberfläche von >230 m²/g und/oder ein Porenvolumen von >0,35 ml/g aufweist; wobei das nicht säurelösliche zweite Aluminiumoxid ausgewählt ist aus einem oder mehreren von Pseudoböhmit-, Böhmit- und γ-Aluminiumoxid-Material.

7. Zusammensetzung nach Anspruch 1, **dadurch gekennzeichnet, dass** die Zusammensetzung weiter ein Additiv-Oxid enthält, das ausgewählt ist aus einem oder mehreren der Oxide von P, B und RE; das Additiv-Oxid vorzugsweise in einer an das nicht säurelösliche zweite Aluminiumoxid fixierten Form zugegeben wird und der Gehalt des Additiv-Oxids im nicht säurelöslichen zweiten Aluminiumoxid nicht mehr als 10 Gew.-%, beispielsweise 0,5 Gew.-% bis 5 Gew.-%, basierend auf dem Gesamtgewicht des nicht säurelöslichen zweiten Aluminiumoxids und des Additiv-Oxids, beträgt;
wobei das Oxid von P auf P₂O₅ basiert, das Oxid von B auf B₂O₃ basiert und das Oxid von RE auf RE₂O₃ basiert.

8. Metallverunreinigungsbeständiger Katalysator, der aus der Zusammensetzung nach einem der Ansprüche 1-7 durch Sprühtrocknung und Kalzinierung erhalten wird, wobei die Zusammensetzung nach einer Kalzinierung bei 550 °C für 3-4 Stunden unter Verwendung von Infrarotspektroskopie auf Oberflächenhydroxylgruppen untersucht wurde, und zwei Spitzen bei 3670 cm⁻¹ und 3730 cm⁻¹ ein Verhältnis der integrierten Flächen von 1-6:1 aufweisen.

9. Metallverunreinigungsbeständiger Katalysator nach Anspruch 8, **dadurch gekennzeichnet, dass** der metallverunreinigungsbeständige Katalysator ein spezifisches Volumengewicht von 0,75-1,15 g/ml, eine spezifische Oberfläche von 100-250 m²/g und ein Wassertropfen-Porenvolumen von 0,18-0,35 ml/g aufweist, wobei vorzugsweise der SiO₂-Gehalt im Katalysator 3 Gew.-% nicht überschreitet; vorzugsweise der Gehalt an Natriumoxid im metallverunreinigungsbeständigen Katalysator 0,3 Gew.-% nicht überschreitet;
wobei vorzugsweise das säurelösliche erste Aluminiumoxid in dem metallverunreinigungsbeständigen Katalysator als kontinuierliche Phase vorliegt, und Mn und das Erdalkalimetall, sofern sie enthalten sind, in einer dispergierten Phase oder gleichförmig in der kontinuierlichen Phase des säurelöslichen ersten Aluminiumoxids verteilt sind; das nicht säurelösliche zweite Aluminiumoxid in einer dispergierten Form vorliegt und in der kontinuierlichen Phase des säurelöslichen ersten Aluminiumoxids dispergiert ist.

10. Verfahren zur Herstellung des metallverunreinigungsbeständigen Katalysators nach einem der Ansprüche 8-9, umfassend die folgenden Schritte:
eine erste technische Lösung:
(1) Bilden einer Aufschlämmung aus einem säurelöslichen ersten Aluminiumoxid, einem nicht säurelöslichen zweiten Aluminiumoxid, Wasser und optional Säure, um eine erste Aufschlämmung zu erhalten, und wobei der Feststoffgehalt der ersten Aufschlämmung vorzugsweise 8-20 Gew.-% beträgt, vorzugsweise ein Molverhältnis von dissoziierbarem H⁺ zur gesamten Aluminiumoxidquelle, basierend auf dem Aluminiumoxid in der ersten Aufschlämmung, 0,05-0,3:1 beträgt; wobei das säurelösliche erste Aluminiumoxid ein festes säurelösliches erstes Aluminiumoxid und/oder ein aluminiumhaltiges Kolloid ist;
(2) Zugeben eines Materials, das ein modifiziertes Metall Mn, beispielsweise ein Mangansalz, enthält, und einer Dispersionsflüssigkeit, die Manganerz enthält, zu der in Schritt (1) erhaltenen ersten Aufschlämmung, gleichmäßiges Rühren dieser, um eine zweite Aufschlämmung zu bilden; wobei vorzugsweise die gebildete zweite Aufschlämmung einen Feststoffgehalt von 10-20 Gew.-% aufweist.
(3) Sprühtrocknung, Kalzinierung;
oder eine zweite technische Lösung:
(S1) Einbringen eines Materials, das ein modifiziertes Metall Mn enthält, in ein säurelösliches erstes Aluminiumoxid, um eine Aufschlämmung zu bilden, die einen Feststoffgehalt von 8-30 Gew.-% aufweist, und Rühren, um eine modifizierte säurelösliche Aluminiumoxidquelle zu erhalten;
(S2) Bilden einer dritten Aufschlämmung aus der modifizierten säurelöslichen Aluminiumoxidquelle, einem nicht säurelöslichen zweiten Aluminiumoxid, Wasser und optional Säure, wobei der Feststoffgehalt der dritten Aufschlämmung vorzugsweise 10-20 Gew.-% beträgt; wobei vorzugsweise das Molverhältnis von dissoziierbarem H⁺ zur gesamten Aluminiumoxidquelle, basierend auf dem Aluminiumoxid in der dritten Aufschlämmung, 0,05-0,3:1 beträgt; wobei das säurelösliche erste Aluminiumoxid ein festes säurelösliches erstes Aluminiumoxid und/oder ein aluminiumhaltiges Kolloid sein kann;
(S3) Sprühtrocknung und Kalzinierung der dritten Aufschlämmung.

11. Verfahren nach Anspruch 10, **dadurch gekennzeichnet, dass**,
bei der ersten technischen Lösung: in Schritt (1), das säurelösliche erste Aluminiumoxid ein festes säurelösliches erstes Aluminiumoxid umfasst; zur Ansäuerung und Peptisierung eine Säure zu der ersten Aufschlämmung zugegeben wird, wobei ein Molverhältnis von dissoziierbarem H⁺ in der Säure zur Summe aus dem festen säurelöslichen ersten Aluminiumoxid und dem nicht säurelöslichen zweiten Aluminiumoxid, basierend auf Aluminiumoxid, 0,05-0,3:1 beträgt;
bei der zweiten technischen Lösung: in Schritt (S1), das säurelösliche erste Aluminiumoxid ein festes säurelösliches Aluminiumoxid umfasst; in Schritt (S2), zur Ansäuerung und Peptisierung eine Säure in die dritte Aufschlämmung eingebracht wird, wobei vorzugsweise ein Molverhältnis von dissoziierbarem H⁺ in der Säure zur Summe aus dem festen säurelöslichen ersten Aluminiumoxid und dem nicht säurelöslichen zweiten Aluminiumoxid, basierend auf Aluminiumoxid, 0,05-0,3:1 beträgt.

12. Verfahren nach Anspruch 10, **dadurch gekennzeichnet, dass**, basierend auf Aluminiumoxid, bei der ersten technischen Lösung und bei der zweiten technischen Lösung jeweils ein Gewichtsverhältnis des säurelöslichen ersten Aluminiumoxids zum nicht säurelöslichen zweiten Aluminiumoxid von 1,5:1 - 20:1 oder von 2:1 - 10:1 beträgt.

13. Verfahren nach Anspruch 10, **dadurch gekennzeichnet, dass** es weiter einen Schritt zum Einbringen einer Erdalkalimetallquelle umfasst, die in Schritt (1) und/oder Schritt (2) eingebracht werden kann, oder dass die Erdalkalimetallquelle in (S1) und/oder (S2) zugegeben wird; wobei die Erdalkalimetallquelle eines oder mehrere von Metallsalz und/oder Metalloxid und/oder Hydroxid von Ca, Mg, Ba und Sr ist; wobei die Erdalkalimetallquelle in einer solchen Menge eingebracht wird, dass der Gehalt an Erdalkalimetall in dem erhaltenen metallverunreinigungsbeständigen Katalysator 0-20 Gew.-%, beispielsweise 0-10 Gew.-%, basierend auf dem Oxid, beträgt.

14. Verfahren nach Anspruch 10, **dadurch gekennzeichnet, dass** das manganhaltige Erz optional so gemahlen wird, dass es eine mittlere Partikelgröße von 0,005-15 Mikrometer, vorzugsweise 1-10 Mikrometer, aufweist; wobei, wenn ein Mahlverfahren verwendet wird, dieses ein Nassmahlen, ein Trockenmahlen, ein Kugelmahlen, ein Sandmahlen umfasst.

15. Katalysator zum katalytischen Cracken, umfassend ein mikrosphärisches Partikel, das aktive Komponenten zum katalytischen Cracken enthält, und einen metallverunreinigungsbeständigen Katalysator, der der metallverunreinigungsbeständige Katalysator nach einem der Ansprüche 8-9 ist; wobei das Massenverhältnis des metallverunreinigungsbeständigen Katalysators zu dem mikrosphärischen Partikel, das eine aktive Komponente zum katalytischen Cracken enthält, 5:95-20:80 beträgt.

## Revendications

1. Composition pour le craquage catalytique d'une huile lourde, comprenant
une première alumine acido-soluble et une deuxième alumine non acido-soluble présentes à un rapport pondéral supérieur ou égal à 2:1, la source de la première alumine acido-soluble présentant une solubilité dans un acide supérieure à 90 %, et la deuxième alumine non acido-soluble présentant une solubilité dans un acide inférieure à 50 %, et
un matériau contenant un Mn métallique modifié qui, sur la base de l'oxyde MnO, représente 5 à 50 % en poids du matériau contenant le Mn métallique modifié et la première alumine acido-soluble ;
dans laquelle la solubilité dans un acide de l'alumine est testée comme suit :
le mélange d'un échantillon d'alumine avec de l'eau à une teneur en solides de 10 % pour obtenir une alumine hydratée,
l'acidification et la dissolution de l'alumine hydratée avec de l'acide chlorhydrique à une concentration de 35 % en poids, à un rapport pondéral de 1:0,2 d'alumine sèche par rapport à l'acide chlorhydrique à 25 °C pendant 60 minutes, suivies de 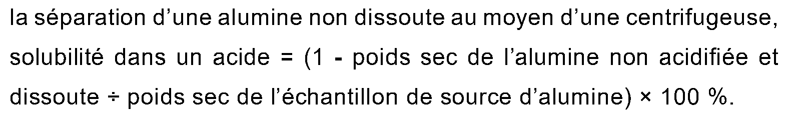 la séparation d'une alumine non dissoute au moyen d'une centrifugeuse, solubilité dans un acide = (1 - poids sec de l'alumine non acidifiée et dissoute ÷ poids sec de l'échantillon de source d'alumine) × 100 %.

2. Composition selon la revendication 1, dans laquelle la première alumine acido-soluble et la deuxième alumine non acido-soluble sont dans un rapport massique de 5:1 à 20:1.

3. Composition selon la revendication 1, dans laquelle le matériau contenant le Mn métallique modifié représente, sur la base de l'oxyde MnO, 10 à 40 % d'un poids total du matériau contenant le Mn métallique modifié et de la première alumine acido-soluble ;
préférablement, le matériau contenant le Mn métallique modifié provient d'un minerai de manganèse et/ou d'autres composés de manganèse, préférablement, sur la base de l'oxyde de manganèse, un rapport pondéral du minerai de manganèse par rapport aux autres composés de manganèse est de 5:1 à 1:5 ; le minerai de manganèse inclut un ou plusieurs parmi un minerai de manganèse tendre, un minerai de manganèse dur, un minerai de manganèse hydraté, un minerai de manganèse brun, un minerai de manganèse noir, la rhodochrosite et un matériau industriel intermédiaire à teneur élevée en Mn tel que du manganèse électrolytique ; le minerai de manganèse présente une teneur en Mn supérieure à 60 % sur la base de MnO ; les autres composés de manganèse sont un ou plusieurs parmi les sels de manganèse et l'hydroxyde de manganèse.

4. Composition selon l'une quelconque des revendications précédentes, **caractérisée en ce que** la composition comprend en outre un oxyde de métal alcalino-terreux, le métal alcalino-terreux étant un ou plusieurs parmi Mg, Ca, Sr et Ba ; la teneur en métal alcalino-terreux, sur la base de l'oxyde, ne dépasse pas 20 % en poids, par exemple 2 à 10 % en poids, du catalyseur résistant aux métaux.

5. Composition selon la revendication 1, dans laquelle la première alumine acido-soluble est sous la forme d'une alumine solide acido-soluble ou sous la forme d'un sol contenant de l'aluminium ;
l'alumine solide acido-soluble est une ou plusieurs parmi gibbsite, boehmite, pseudo-boehmite et bayerite, le sol contenant de l'aluminium est sélectionné parmi un ou plusieurs parmi un gel d'aluminium amorphe, un sol d'aluminium et un gel d'aluminium phosphoré.

6. Composition selon la revendication 1, dans laquelle la deuxième alumine non acido-soluble est une deuxième alumine non acido-soluble présentant une grande taille de particule et une grande taille de pore, la deuxième alumine non acido-soluble présentant une solubilité dans un acide < 35 %, une taille médiane de particule de 1 µm à 12 µm, préférablement de 4 µm à 10 µm, une taille moyenne de pore de 4 nm à 12 nm, une superficie spécifique > 230 m²/g, et/ou un volume de pore > 0,35 ml/g ; la deuxième alumine non acido-soluble est sélectionnée parmi une ou plusieurs parmi pseudo-boehmite, boehmite et alumine γ.

7. Composition selon la revendication 1, **caractérisée en ce que** la composition contient en outre un oxyde additif, lequel est sélectionné parmi un ou plusieurs parmi les oxydes de P, B, RE ; l'oxyde additif est préférablement ajouté sous une forme en étant fixé sur la deuxième alumine non acido-soluble, et la teneur en oxyde additif dans la deuxième alumine non acido-soluble n'est pas supérieure à 10 % en poids, par exemple de 0,5 % en poids à 5 % en poids, sur la base d'un poids total de la deuxième alumine non acido-soluble et de l'oxyde additif ;
dans laquelle, l'oxyde de P est à base de P₂O₅, l'oxyde de B est à base de B₂O₃, et l'oxyde de RE est à base de RE₂O₃.

8. Catalyseur résistant à la pollution par les métaux, qui est obtenu à partir de la composition selon l'une quelconque des revendications 1 à 7 par séchage par pulvérisation et calcination, dans lequel, après calcination à 550 °C pendant 3 à 4 heures, la composition a été analysée pour les groupes hydroxyle de surface en utilisant la spectroscopie infrarouge, et deux pics à 3670 cm⁻¹ et 3730 cm⁻¹ présentent un rapport des aires intégrées de 1 à 6:1.

9. Catalyseur résistant à la pollution par les métaux selon la revendication 8, **caractérisé en ce que** le catalyseur résistant à la pollution par les métaux présente une masse volumique apparente de 0,75 à 1,15 g/ml, une superficie spécifique de 100 à 250 m²/g, un volume de pores par la méthode de la goutte d'eau de 0,18 à 0,35 ml/g, préférablement, la teneur en SiO₂ dans le catalyseur ne dépasse pas 3 % en poids ; préférablement, la teneur en oxyde de sodium dans le catalyseur résistant à la pollution par les métaux ne dépasse pas 0,3 % en poids ;
préférablement, la première alumine acido-soluble dans le catalyseur résistant à la pollution par les métaux est présente sous la forme d'une phase continue, et le Mn ainsi que le métal alcalino-terreux, lorsqu'ils sont contenus, sont répartis dans une phase dispersée ou uniformément dans la phase continue de la première alumine acido-soluble ; la deuxième alumine non acido-soluble est présente sous une forme dispersée, et est dispersée dans la phase continue de la première alumine acido-soluble.

10. Procédé de préparation du catalyseur résistant à la pollution par les métaux selon l'une quelconque des revendications 8 à 9, comprenant les étapes suivantes :
une première solution technique :
(1) la formation d'une suspension d'une première alumine acido-soluble, d'une deuxième alumine non acido-soluble, d'eau et facultativement d'un acide pour obtenir une première suspension, et la teneur en solides de la première suspension est préférablement de 8 à 20 % en poids, préférablement, un rapport molaire des H⁺ dissociables par rapport à une source d'alumine totale, sur la base de l'alumine dans la première suspension, est de 0,05 à 0,3:1 ; la première alumine acido-soluble est une première alumine solide acido-soluble et/ou un colloïde contenant de l'aluminium ;
(2) l'ajout d'un matériau contenant du Mn métallique modifié, par exemple un sel de manganèse et un liquide de dispersion contenant un minerai de manganèse, à la première suspension obtenue à l'étape (1), le fait de les mélanger uniformément pour former une deuxième suspension ; préférablement, la deuxième suspension formée présente une teneur en solides de 10 à 20 % en poids ;
(3) un séchage par pulvérisation, une calcination ;
ou, une deuxième solution technique :
(S1) l'introduction d'un matériau contenant du Mn métallique modifié dans une première alumine acido-soluble pour former une suspension présentant une teneur en solides de 8 à 30 % en poids, sous agitation pour obtenir une source d'alumine acido-soluble modifiée ;
(S2) la formation d'une troisième suspension de la source d'alumine acido-soluble modifiée, d'une deuxième alumine non acido-soluble, d'eau et facultativement d'un acide, une teneur en solides de la troisième suspension étant préférablement de 10 à 20 % en poids ; préférablement, un rapport molaire des H⁺ dissociables par rapport à une source d'alumine totale, sur la base de l'alumine dans la troisième suspension, est de 0,05 à 0,3:1 ; la première alumine acido-soluble peut être une première alumine solide acido-soluble et/ou un colloïde contenant de l'aluminium ;
(S3) le séchage par pulvérisation et la calcination de la troisième suspension.

11. Procédé selon la revendication 10, **caractérisé en ce que**,
pour la première solution technique : à l'étape (1), la première alumine acido-soluble comprend une première alumine solide acido-soluble ; un acide est ajouté à la première suspension pour l'acidifier et la peptiser, dans lequel, un rapport molaire des H⁺ dissociables de l'acide par rapport à une somme de la première alumine solide acido-soluble et de la deuxième alumine non acido-soluble, sur la base de l'alumine, est de 0,05 à 0,3:1 ;
pour la deuxième solution technique : à l'étape (S1), la première alumine acido-soluble comprend une alumine solide acido-soluble ; un acide est introduit dans la troisième suspension à l'étape (S2) pour l'acidifier et la peptiser, préférablement, un rapport molaire des H⁺ dissociables de l'acide par rapport à une somme de la première alumine solide acido-soluble et de la deuxième alumine non acido-soluble, sur la base de l'alumine, est de 0,05 à 0,3:1.

12. Procédé selon la revendication 10, **caractérisé en ce que**, sur la base de l'alumine, dans la première solution technique et la deuxième solution technique séparément, un rapport pondéral de la première alumine acido-soluble par rapport à la deuxième alumine non acido-soluble est de 1,5:1 à 20:1 ou de 2:1 à 10:1.

13. Procédé selon la revendication 10, **caractérisé en ce qu'**il comprend en outre une étape d'introduction d'une source de métal alcalino-terreux qui peut être introduite à l'étape (1) et/ou à l'étape (2), ou la source de métal alcalino-terreux est ajoutée dans (S1) et/ou (S2) ; la source de métal alcalino-terreux est un ou plusieurs parmi les sels métalliques et/ou les oxydes métalliques et/ou les hydroxydes de Ca, Mg, Ba et Sr ; la source de métal alcalino-terreux est introduite en une quantité telle que la teneur en métal alcalino-terreux dans le catalyseur résistant à la pollution par les métaux obtenu est de 0 à 20 % en poids, par exemple de 0 à 10 % en poids, sur la base de l'oxyde.

14. Procédé selon la revendication 10, **caractérisé en ce que** le minerai contenant du manganèse est facultativement broyé pour présenter une taille médiane de particule de 0,005 à 15 microns, préférablement de 1 à 10 microns ; lorsqu'il est utilisé, un procédé de broyage comprend un broyage humide, un broyage à sec, un broyage aux boulets, un broyage au sable.

15. Catalyseur de craquage catalytique, comprenant une particule microsphérique contenant des composants actifs de craquage catalytique et un catalyseur résistant à la pollution par les métaux qui est le catalyseur résistant à la pollution par les métaux selon l'une quelconque des revendications 8 à 9 ; un rapport massique du catalyseur résistant à la pollution par les métaux par rapport à la particule microsphérique contenant un composant actif de craquage catalytique est de 5:95 à 20:80.
